# FASCICULE DE BREVET EUROPEEN

(11) **EP 3 822 147 B1**
(45) Date de publication et mention de la délivrance du brevet: **24.08.2022**
(21) Numéro de dépôt: 20207200.5
(22) Date de dépôt: 12.11.2020
(51) Int. Cl.: B62B 1/18, B62B 1/00, B62B 1/20

(54) **SYSTÈME MÉCANIQUE DE MISE À NIVEAU AUTOMATIQUE POUR VÉHICULE À BRAS**
MECHANISCHES SELBSTNIVELLIERUNGSSYSTEM FÜR FAHRZEUG MIT AUSLEGER
MECHANICAL SYSTEM FOR AUTOMATIC LEVELLING FOR VEHICLE WITH ARMS

(30) Priorité: 13.11.2019 FR 1912676
(43) Date de publication de la demande: 19.05.2021
(73) Titulaire: Ponçon, Gilbert, 38340 La Sûre en Chartreuse (FR)
(72) Inventeur: Ponçon, Gilbert, 38340 La Sûre en Chartreuse (FR)
(74) Mandataire: Hautier IP

(56) Documents cités:
- DE-A1- 3 405 136
- JP-U- S52 111 158
- US-A1- 2004 222 604
- US-A1- 2004 227 314
- US-A1- 2006 170 197

## Description

### DOMAINE TECHNIQUE DE L'INVENTION

La présente invention concerne le domaine des dispositifs mécaniques de mise à niveau automatique pour système à verticalité recommandée. Elle trouve pour application particulièrement avantageuse la mise à niveau de véhicules à bras tels qu'une brouette.

### ÉTAT DE LA TECHNIQUE

Il est connu, du document de brevet référencé US 7,147,234 B2, un système mécanique de mise à niveau automatique pour une brouette.

La brouette comprend un châssis sensiblement symétrique par rapport à un plan médian, deux pieds, une roue et deux bras configurés pour permettre à un utilisateur de soulever les pieds relativement au sol pour pouvoir déplacer la brouette en la faisant rouler sur sa roue. Le châssis comprend une première partie, dite avant, configurée pour supporter la roue et une deuxième partie, dite arrière, depuis laquelle s'étendent les pieds et les bras.

Le système comprend trois barres agencées sous le châssis de la brouette et s'étendant chacune depuis un nœud de jonction mécanique. Une première barre s'étend depuis le nœud jusqu'à une extrémité distale formant un premier pied de la brouette. Une deuxième barre s'étend depuis le nœud jusqu'à une extrémité distale formant un second pied de la brouette. Et une troisième barre s'étend depuis le nœud jusqu'à une extrémité distale configurée pour être fixée par une liaison mécanique à la première partie du châssis de la brouette.

Le système comprend en outre au moins un dispositif de verrouillage et de déverrouillage automatiques entre les première et deuxième barres et le châssis, le dispositif étant fixé à la deuxième partie du châssis de la brouette et étant configuré pour :
- retenir en une position suspendue lesdites première et deuxième barres lorsque les premier et second pieds sont soulevés relativement au sol,
- permettre un mouvement de rotation et de translation verticale desdites première et deuxième barres relativement au châssis lorsque les premier et second pieds sont amenés au sol, le cas échéant successivement, et
- retenir le châssis en une position de verrouillage de sa rotation relativement aux première et deuxième barres lorsque les premier et second pieds reposent au sol.

Le système selon le document de brevet référencé US 7,147,234 B2 permet effectivement d'améliorer de façon automatique la stabilité de la brouette qui en est équipée, par rapport à une brouette conventionnelle, en particulier lorsque la brouette est stationnée sur un sol pentu.

Toutefois, il serait bon de proposer un système permettant d'améliorer encore le niveau de stabilité déjà atteint. Plus particulièrement, il existe un besoin pour un système de mise à niveau automatique permettant d'améliorer l'équilibre d'un véhicule à bras sur un sol pentu, voire d'assurer l'équilibre d'un véhicule à bras sur un sol plus pentu que ne le permet le système susmentionné.

Par ailleurs, le système susmentionné induit inévitablement un effort en torsion des première et deuxième barres et du nœud de jonction lorsque les premier et second pieds reposent au sol. Cet effort de torsion, augmenté à mesure que la charge de la brouette est importante et que la manipulation du conducteur est indélicate, tend à montrer un manque de robustesse et de tenue dans le temps du système selon le document de brevet référencé US 7,147,234 B2, au moins relativement à une brouette conventionnelle. Des systèmes équivalents sont divulgués par: US2006170197, US2004227314 et JPS52111158U.

Un objet de la présente invention est de répondre à au moins l'un de ces besoins et/ou à pallier l'un au moins de ces inconvénients.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre son objet, l'invention propose, selon un premier de ses aspects, un système mécanique de mise à niveau automatique pour un véhicule à bras,
le véhicule à bras comprenant un châssis sensiblement symétrique par rapport à un plan médian, au moins un pied, au moins une roue et au moins un bras configuré pour permettre à un utilisateur de soulever ledit au moins un pied relativement au sol pour pouvoir déplacer le véhicule en le faisant rouler sur ladite au moins une roue, le châssis comprenant une première partie, dite avant, configurée pour supporter ladite au moins une roue et une deuxième partie, dite arrière, depuis laquelle s'étend ledit au moins un pied et ledit au moins un bras,
le système comprenant trois barres agencées sous le châssis du véhicule à bras et s'étendant chacune depuis un nœud de jonction mécanique dont une première barre s'étend depuis le nœud jusqu'à une extrémité distale formant un premier pied du véhicule, une deuxième barre s'étend depuis le nœud jusqu'à une extrémité distale formant un second pied du véhicule et une troisième barre s'étend depuis le nœud jusqu'à une extrémité distale configurée pour être fixée par une liaison mécanique à la première partie du châssis du véhicule,
le système comprenant en outre au moins un dispositif de verrouillage et de déverrouillage automatiques entre les première et deuxième barres et le châssis, le dispositif étant fixé à la deuxième partie du châssis du véhicule et étant configuré pour :
   - retenir en une position suspendue lesdites première et deuxième barres lorsque les premier et second pieds sont soulevés relativement au sol,
   - permettre un mouvement de rotation et de translation verticale desdites première et deuxième barres relativement au châssis lorsque les premier et second pieds sont amenés au sol, le cas échéant successivement, et
   - retenir le châssis en une position de verrouillage de sa rotation relativement aux première et deuxième barres lorsque les premier et second pieds reposent au sol,
le système étant essentiellement tel que les trois barres s'étendent solidairement depuis le nœud de jonction, la liaison mécanique entre l'extrémité distale de la troisième barre et la première partie du châssis est une rotule, le dispositif de verrouillage et de déverrouillage est configuré pour permettre en outre un déplacement latéral limité du nœud de jonction lorsque les premier et second pieds sont amenés au sol, le cas échéant successivement.

En autorisant le déport latéral du nœud de jonction et donc de la troisième barre, jouant le rôle de timon, l'invention selon son premier aspect permet un meilleur centrage de la projection orthogonale du centre de gravité du véhicule à bras relativement à sa surface de sustentation. Ainsi, le système de mise à niveau selon le premier aspect de l'invention permet d'améliorer, par rapport aux systèmes existants, la stabilité du véhicule à bras pour un même dénivelé du sol sur lequel le véhicule est posé et/ou pour une même charge embarquée. En outre, le système de mise à niveau selon le premier aspect de l'invention permet d'assurer l'équilibre du véhicule à bras pour des dénivelés supérieurs à ceux auxquels les systèmes existants sont limités et/ou pour des masses et/ou des encombrements de charges embarquées supérieurs à ce qu'autorisent les systèmes existants.

Du fait que les trois barres s'étendent solidairement depuis le nœud de jonction, de sorte que les trois barres et le nœud de jonction forment ensemble une pièce à trois branches d'un seul tenant, l'effort en torsion des première et deuxième barres et du nœud de jonction lorsque les premier et second pieds reposent au sol est avantageusement limité, voire annulé, par rapport aux systèmes existants et le système mécanique de mise à niveau automatique selon l'invention confère au véhicule à bras qu'il équipe une tenue dans le temps moins, voire pas du tout, réduite relativement à une brouette conventionnelle.

De manière facultative, le système peut en outre présenter au moins l'une quelconque des caractéristiques suivantes.

Les trois barres et le nœud de jonction peuvent former ensemble une pièce à trois branches présentant une symétrie par rapport à un plan de coupe longitudinal de la troisième barre, les première et deuxième barres formant entre elles une forme en V et étant agencées relativement au véhicule à bras de sorte que la pointe de la forme en V soit orientée vers le châssis du véhicule à bras.

Le dispositif de verrouillage et de déverrouillage peut être configuré pour permettre, par action de son poids, le déverrouillage du mouvement de rotation desdites première et deuxième barres relativement au châssis lorsque les premier et second pieds sont soulevés relativement au sol par un mouvement d'amplitude au moins supérieure à l'amplitude du mouvement de translation verticale desdites première et deuxième barres relativement au châssis.

Le dispositif de verrouillage et de déverrouillage peut comprendre un ergot s'étendant solidairement depuis le nœud de jonction et au moins une série de dents s'étendant vers le nœud depuis la deuxième partie du châssis, l'ergot étant configuré pour se loger entre deux dents de ladite au moins une série lorsque les premier et second pieds sont amenés au sol, le cas échéant successivement, de sorte à verrouiller le mouvement de rotation desdites première et deuxième barres relativement au châssis lorsque les premier et second pieds reposent au sol.

Selon des premier et deuxième modes de réalisation du premier aspect de l'invention, lorsque les premier et second pieds reposent au sol, le poids du véhicule à bras, et plus particulièrement le poids de son châssis, repose sur l'appui de l'ergot sur ladite au moins une série de dents avec laquelle l'ergot coopère pour verrouiller le mouvement de rotation desdites première et deuxième barres relativement au châssis.

Selon des premier et deuxième modes de réalisation du premier aspect de l'invention, le dispositif de verrouillage et de déverrouillage peut comprendre une traverse comprenant par exemple une pièce sensiblement plane, la traverse étant fixée à la deuxième partie du châssis du véhicule et présentant une première ouverture à travers laquelle passe une portion de la troisième barre, ladite première ouverture étant sensiblement symétrique par rapport au plan médian et configurée pour permettre la rotation, la translation verticale des première et deuxième barres relativement au châssis et le déplacement latéral du nœud de jonction. Au besoin, la première ouverture peut être configurée pour limiter l'un au moins des déplacements qu'il est configuré pour permettre.

Selon le premier mode de réalisation du premier aspect de l'invention, le dispositif de verrouillage et de déverrouillage comprend en outre un organe de liaison s'étendant solidairement depuis le nœud de jonction et ladite traverse présente une deuxième ouverture sensiblement symétrique par rapport au plan médian et située sous la première ouverture, l'organe de liaison et la deuxième ouverture étant configurés pour coopérer entre eux avec un jeu de sorte à constituer à la fois un pivot autour duquel la rotation des première et deuxième barres relativement au châssis est permise et un guide de la translation verticale des première et deuxième barres. De préférence, le jeu avec lequel l'organe de liaison et la deuxième ouverture coopèrent entre eux est tel que, lorsque les premier et second pieds reposent au sol, le poids du véhicule à bras ne repose pas sur l'appui de l'organe de liaison sur la partie haute de la deuxième ouverture, mais repose sur l'appui de l'ergot sur ladite au moins une série de dents avec laquelle l'ergot coopère pour verrouiller le mouvement de rotation desdites première et deuxième barres relativement au châssis.

Selon le deuxième mode de réalisation du premier aspect de l'invention, la première ouverture présente au moins une indentation, de préférence un nombre pair d'indentations réparties symétriquement par rapport au plan médian, s'étendant depuis une portion supérieure de l'ouverture, chaque indentation étant configurée pour former une partie d'un logement étroit permettant d'accueillir et de maintenir en position ladite portion de la troisième barre lorsque les premier et second pieds reposent au sol, tout en coopérant avec ladite portion par un jeu permettant d'accommoder la translation verticale des première et deuxième barres relativement au châssis. De préférence, le jeu avec lequel la première ouverture et ladite portion de la troisième barre coopèrent entre elles est tel que, lorsque les premier et second pieds reposent au sol, le poids du véhicule à bras ne repose pas sur l'appui de ladite portion de la troisième barre sur la partie haute de la première ouverture, mais repose sur l'appui de l'ergot sur ladite au moins une série de dents avec laquelle l'ergot coopère pour verrouiller le mouvement de rotation desdites première et deuxième barres relativement au châssis

Selon un troisième mode de réalisation du premier aspect de l'invention, le dispositif de verrouillage et de déverrouillage comprend deux bielles dont :
- une première bielle relie un premier côté latéral de la deuxième partie du châssis à une portion intermédiaire de la première barre par deux articulations fixées à ses extrémités et
- une seconde bielle relie un second côté latéral de la deuxième partie du châssis à une portion intermédiaire de la deuxième barre par deux articulations fixées à ses extrémités,
les bielles étant configurées pour guider et limiter, de façon symétrique par rapport au plan médian, la rotation et la translation verticale des première et deuxième barres relativement au châssis et le déplacement latéral du nœud de jonction.

Le système selon ce troisième mode de réalisation permet de s'assurer d'un centrage sensiblement, voire tout à fait, parfait de la projection orthogonale du centre de gravité d'un véhicule à bras relativement à sa surface de sustentation, jusqu'à une pente d'au moins 20° du sol.

Selon une particularité du troisième mode de réalisation, chacune des articulations joignant une première extrémité d'une bielle à ladite portion intermédiaire d'une barre parmi les première et deuxième barres peut être une articulation configurée pour permettre une rotation et un désaxage de ladite extrémité autour d'un axe sensiblement parallèle au plan médian et chacune des articulations joignant l'extrémité d'une bielle à un côté latéral parmi les premier et second côtés latéraux de la deuxième partie du châssis peut être une articulation configurée pour permettre une rotation et un désaxage de ladite extrémité autour d'un axe sensiblement parallèle au plan médian et pour présenter un jeu permettant d'accommoder la translation verticale des première et deuxième barres relativement au châssis. De préférence, le jeu que présente chacune des articulations joignant l'extrémité d'une bielle à un côté latéral parmi les premier et second côtés latéraux de la deuxième partie du châssis est tel que, lorsque les premier et second pieds reposent au sol, le poids du véhicule à bras ne repose pas sur l'appui de l'ergot sur ladite au moins une série de dents avec laquelle l'ergot coopère pour verrouiller le mouvement de rotation desdites première et deuxième barres relativement au châssis, mais repose sur l'appui de l'extrémité de chaque bielle jointe à un côté latéral du châssis sur ce côté latéral du châssis.

Un autre aspect concerne un véhicule à bras comprenant un système mécanique de mise à niveau automatique tel qu'introduit ci-dessus.

Le châssis du véhicule à bras introduit ci-dessus peut être configuré pour y fixer l'un au moins parmi : une benne, au moins une ridelle, un plateau et un tonneau.

En complément ou en alternative, le véhicule à bras peut comprendre au moins un frein équipé d'une commande par câble et agencé conjointement avec ladite au moins une roue, de sorte à freiner la rotation de la roue lorsque la commande par câble n'est pas sollicitée par l'utilisateur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement l'agencement d'un élément du système de mise à niveau selon un mode de réalisation de l'invention relativement au châssis et à la roue d'un véhicule à bras.
La figure 2 représente une vue de l'arrière d'un véhicule à bras équipé d'un système de mise à niveau selon un premier mode de réalisation de l'invention.
La figure 3 représente une vue de l'arrière d'un véhicule à bras équipé d'un système de mise à niveau selon un deuxième mode de réalisation de l'invention.
La figure 4 représente une vue de l'arrière d'un véhicule à bras équipé d'un système de mise à niveau selon un troisième mode de réalisation de l'invention.
La figure 5 représente la vue de la figure 4, lorsque le véhicule à bras repose sur un sol plat.
La figure 6 représente la vue de la figure 4, lorsque les premier et second pieds du véhicule à bras sont soulevés relativement au sol.
La figure 7 représente une vue en perspective du véhicule à bras tel qu'illustré sur la figure 6.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

On entend par « système à verticalité recommandée » un système dont le bon usage ou le bon fonctionnement est assuré par le respect d'un positionnement donné de certains au moins de ses éléments par rapport à l'horizontale.

On entend par « châssis » un ensemble formé de pièces, généralement de métal ou de bois, assemblées, et qui supporte les différents organes d'un système, ici à verticalité recommandée. Le châssis d'un système à verticalité recommandée fait généralement partie des éléments dont une certaine verticalité doit être respectée.

On entend par « jeu » une différence des cotes d'ajustement entre deux organes mécaniques, destinée à permettre un mouvement relatif entre ces deux organes.

On entend par « bielle » une pièce longue et rectiligne reliant deux pièces mobiles entre elles à l'aide d'articulations fixées à ses extrémités.

La présente invention présente essentiellement deux aspects. Le premier aspect concerne un système mécanique de mise à niveau automatique pour un véhicule à bras. Le deuxième aspect concerne un véhicule à bras équipé du système mécanique selon le premier aspect.

Le système mécanique de mise à niveau automatique selon le premier aspect de l'invention se distingue essentiellement du système connu du document de brevet référencé US 7,147,234 B2 par un ensemble de trois caractéristiques détaillées ci-dessous en référence aux figures annexées.

Selon une première de ces trois caractéristiques, les trois barres 11, 12, 13 agencées sous le châssis 21 du véhicule à bras 2 et s'étendant chacune depuis un nœud de jonction mécanique 123 s'étendent solidairement depuis ledit nœud de jonction 123. Au contraire, dans le système connu du document de brevet référencé US 7,147,234 B2, la troisième barre est fixe par rapport au châssis, et les première et deuxième barres, s'étendant chacune jusqu'à former respectivement un pied du véhicule, sont articulées par rapport à cette troisième barre fixe. Le système selon le premier aspect de la présente invention présente donc déjà l'avantage, vis-à-vis du système connu du document de brevet référencé US 7,147,234 B2, de présenter une robustesse mécanique accrue, notamment à tout éventuel effort en torsion des première et deuxième barres 11, 12 et du nœud de jonction 123 lorsque les premier et second pieds 221, 22 reposent au sol 3.

Selon une deuxième caractéristique distinctive, la liaison mécanique 1321 entre l'extrémité distale 131 de la troisième barre 13 et la première partie 211 du châssis 21 est une rotule. Cette caractéristique confère à la troisième barre 13 un rôle de timon. Notons qu'il est ainsi avantageusement possible de jouer sur la résistance de la rotule aux mouvements de rotation et de translation de la pièce formée des trois barres solidaires entre elles, de sorte à régler finement ces mouvements, voire chacun de ces mouvements indépendamment l'un de l'autre, notamment en fonction du poids que présente cette pièce.

Selon une troisième caractéristique distinctive, le dispositif de verrouillage et de déverrouillage 10 est configuré pour permettre, outre les mouvements de rotation et de translation verticale de la pièce formée des trois barres solidaires entre elles, un déplacement latéral limité du nœud de jonction 123, et donc de ladite pièce, lorsque les premier et second pieds 221, 222 sont amenés au sol 3, le cas échéant successivement.

C'est l'ensemble de ces trois caractéristiques distinctives qui, entrant en synergie, confère, au véhicule à bras 2 équipé du système 1 selon le premier aspect de l'invention, un meilleur centrage de la projection orthogonale du centre de gravité du véhicule à bras 2 relativement à sa surface de sustentation. Par voie, le système de mise à niveau automatique 1 selon le premier aspect de l'invention permet d'améliorer, par rapport aux systèmes existants, la stabilité du véhicule à bras 2 qu'il équipe pour un même dénivelé du sol 3 sur lequel le véhicule 2 est posé et/ou pour une même charge embarquée. En outre, le système de mise à niveau 1 selon le premier aspect de l'invention permet d'assurer l'équilibre du véhicule à bras 2 pour des dénivelés supérieurs à ceux auxquels les systèmes existants sont limités et/ou pour des masses et/ou des encombrements de charges embarquées supérieurs à ce qu'autorisent les systèmes existants.

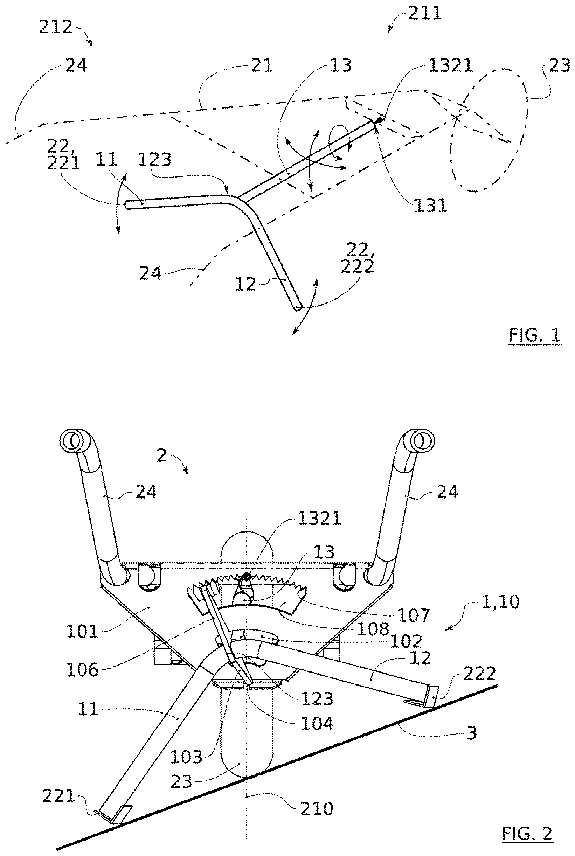

Avant de décrire de façon détaillée chacun des trois modes de réalisation de l'invention selon ses différents aspects, notons ici, en référence à la figure 1, que ces différents modes de réalisation ont en commun l'agencement relatif de la pièce formée des trois barres 11, 12, 13 solidaires entre elles relativement au châssis 21 du véhicule à bras 2. Plus particulièrement, comme l'illustre la figure 1, les trois barres 11, 12, 13 et le nœud de jonction 123 forment ensemble une pièce à trois branches présentant une symétrie par rapport à un plan de coupe longitudinal de la troisième barre 13. Les première et deuxième barres 11, 12 forment entre elles une forme en V. Elles sont agencées relativement au véhicule à bras 2 de sorte que la pointe de la forme en V soit orientée vers le châssis 21 du véhicule à bras 2. Plus particulièrement, la forme en V des premières et deuxièmes barres 11, 12 s'inscrit de préférence dans un plan sensiblement vertical, lorsque le véhicule 2 est en stationnement.

Il sera apprécié, au vu de ce qui précède et de ce qui suit, que le système de mise à niveau automatique 1 selon le premier aspect de l'invention est avantageusement agençable, sur des véhicules à bras 2 de différents types, y compris les véhicules à bras 2 existants non équipés initialement du système 1 selon le premier aspect de l'invention, sans nécessairement nécessiter de lourdes modifications de ces véhicules à bras 2, et notamment de leur châssis 21, de la jonction mécanique entre leur châssis 21 et leur(s) roue(s) 23, et d'éventuels accessoires pouvant être montés, éventuellement de façon amovible, sur leur châssis 21.

Un premier mode de réalisation de l'invention est décrit ci-dessous en référence à la figure 2.

Dans ce premier mode de réalisation, le dispositif de verrouillage et de déverrouillage 10 comprend une traverse 101 prenant la forme d'une pièce sensiblement plane. Par exemple, la traverse 101 est sensiblement perpendiculaire au plan médian 210. La traverse 101 est fixée à la deuxième partie 212 du châssis 21 du véhicule 2. Cette traverse 101 présente une première ouverture 102 à travers laquelle passe une portion de la troisième barre 13. De préférence, ladite première ouverture 102 est sensiblement symétrique par rapport au plan médian 210. Elle est configurée pour permettre la rotation, la translation verticale des première et deuxième barres 11, 12 relativement au châssis 21 et le déplacement latéral du nœud de jonction 123. En effet, comme l'illustre la figure 2, la portion de la troisième barre 13 destinée à passer au travers de la première ouverture 102 présente une section de dimensions inférieures aux dimensions intérieures de l'ouverture 102, de sorte à permettre le mouvement de translation verticale et le déport latéral de ladite portion de la troisième barre. Notons également que la première ouverture 102 peut présenter avantageusement une forme sensiblement courbée dont le rayon de courbure est orienté vers le sol 3. En outre, les bords latéraux de la première ouverture 102 peuvent constituer des butées limitant le déport latéral de la troisième barre 13.

De façon avantageuse, notamment en termes de dimensionnement de la première ouverture 102 selon un axe vertical, le dispositif de verrouillage et de déverrouillage 10 de l'invention selon son premier mode de réalisation peut comprendre en outre un mécanisme permettant de guider, voire de limiter, le déplacement vertical de la troisième barre et permettant de constituer un pivot à la rotation de la troisième barre. Pour ce faire, un organe de liaison 103 s'étend solidairement depuis le nœud de jonction 123 et ladite traverse 101 présente une deuxième ouverture 104 sensiblement symétrique par rapport au plan médian 210 et située sous la première ouverture 102 ; et l'organe de liaison 103 et la deuxième ouverture 104 sont configurés pour coopérer entre eux avec un jeu de sorte à constituer à la fois un pivot autour duquel la rotation des première et deuxième barres 11, 12 relativement au châssis 21 est permise et un guide de la translation verticale des première et deuxième barres 11, 12. Par exemple, la deuxième ouverture 104 est une fente ouverte par sa partie basse et pratiquée de préférence dans une partie basse de la traverse 101 repliée vers l'arrière du véhicule à bras 2. L'organe de liaison 103 présente une extrémité configurée pour s'insérer dans la fente, de sorte à pouvoir y coulisser selon le mouvement de translation verticale des première et deuxième barres 11, 12 relativement au châssis 21. L'axe longitudinal de la fente s'inscrit dans le plan médian 210 du châssis et présente une longueur nécessaire et suffisante pour empêcher tout désengagement de l'extrémité de l'organe de liaison 103 depuis la fente. La fente et l'organe de liaison 103 peuvent en outre être configurés entre eux de sorte à limiter l'angle de rotation de la troisième barre 13, par exemple à un intervalle compris entre -20° et +20°. La retenue en une position suspendue desdites première et deuxième barres lorsque les premier et second pieds sont soulevés relativement au sol peut être assurée par l'appui de la troisième barre 13 sur la partie basse du pourtour de la première ouverture 102, sans que l'extrémité de l'organe de liaison 103 ne soit extraite de la partie basse de la deuxième ouverture 104.

Le premier mode de réalisation de l'invention prévoit également, comme chacun des deux autres modes de réalisation décrits ci-dessous, et comme le système de mise à niveau automatique connu du document de brevet référencé US 7,147,234 B2, un moyen de verrouillage de la rotation des première et deuxième barres 11, 12 selon une pluralité de positions destinées chacune à accommoder un dénivelé déterminé du sol 3 sur lequel le véhicule à bras 2 est stationné. Ici, le moyen de verrouillage comprend plus particulièrement un ergot 106 s'étendant solidairement depuis le nœud de jonction 123 et une série de dents 107 s'étendant vers le nœud 123 depuis la deuxième partie 212 du châssis 21. Dans l'exemple illustré sur la figure 2, la série de dents 107 est plus particulièrement formée par usinage du pourtour supérieur d'une ouverture 108 pratiquée dans la traverse 101, cette ouverture étant située au-dessus de la première ouverture 102 et étant de préférence sensiblement symétrique par rapport au plan médian 210. De préférence, chaque série de dents comprend un nombre pair de dents 107. L'ergot 106 est configuré pour se loger, par exemple par son extrémité distale, entre deux dents 107 de la série lorsque les premier et second pieds 221, 222 sont amenés au sol 3, le cas échéant successivement. Il est ainsi rendu possible de verrouiller le mouvement de rotation des première et deuxième barres 11, 12 relativement au châssis 21 lorsque les premier et second pieds 221, 222 reposent au sol 3, par mise en prise de l'ergot 106 entre au moins deux dents 107. De préférence, comme l'illustre la figure 2, l'ergot 106 peut présenter une forme configurée pour coopérer avec une pluralité de dents 107 parmi ladite série. Une stabilité accrue du verrouillage est ainsi obtenue.

Le déverrouillage du mouvement de rotation des première et deuxième barres 11, 12 relativement au châssis 21 est obtenu par désengagement automatique de l'ergot 106 depuis les dents 107, par la seule action du poids de la pièce à trois branches, lorsque les premier et second pieds 221, 222 sont soulevés relativement au sol 3 par un mouvement d'amplitude au moins supérieure à l'amplitude du mouvement de translation verticale desdites première et deuxième barres 11, 12 relativement au châssis 21.

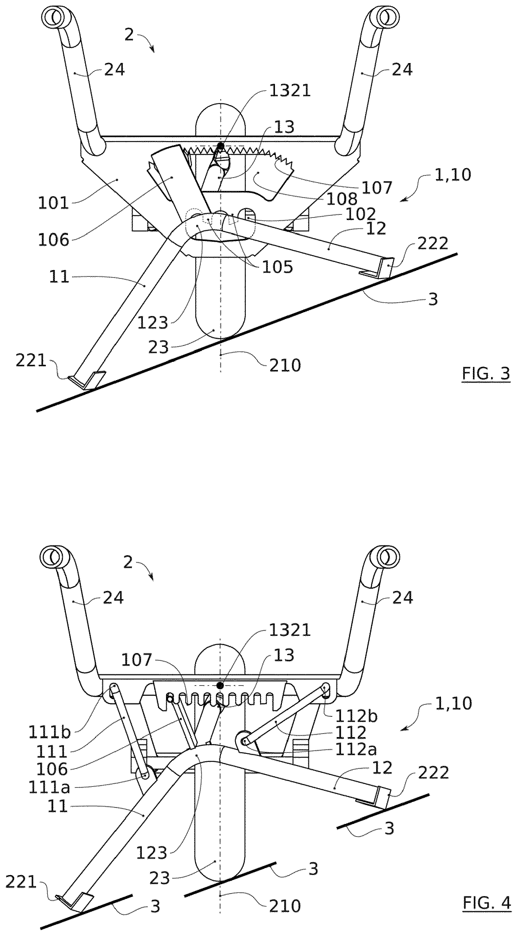

Le deuxième mode de réalisation de l'invention est décrit ci-dessous en référence à la figure 3, du moins pour ce qui concerne ses différences structurelles relativement au premier mode de réalisation décrit ci-dessus.

Contrairement au premier mode de réalisation de l'invention, le deuxième mode ne comprend ni un organe de liaison 103, ni une deuxième ouverture 104. En lieu et place de ses éléments, le deuxième mode de réalisation de l'invention propose que la première ouverture 102 présente au moins une indentation 105 s'étendant depuis une portion supérieure de l'ouverture 102. Chaque indentation 105 est plus particulièrement configurée pour former une partie d'un logement étroit permettant d'accueillir et de maintenir en position ladite portion de la troisième barre 13 lorsque les premier et second pieds 221, 222 reposent au sol 3, tout en coopérant avec ladite portion par un jeu permettant d'accommoder la translation verticale des première et deuxième barres 11, 12 relativement au châssis 21. Autrement dit, la distance entre l'extrémité des indentations et la partie basse du pourtour de l'ouverture 102 est suffisante pour autoriser le passage de ladite portion de la troisième barre 13. De préférence, il est prévu un nombre pair d'indentations réparties symétriquement par rapport au plan médian 210. Dans l'exemple illustré sur la figure 3, deux indentations 105 sont prévues. De la sorte, les indentations 105 autorisent un placement de ladite portion de la troisième barre dans le plan médian 210, ou à droite du plan médian, ou à gauche du plan médian, chaque placement de part et d'autre du plan médian correspondant à un déport latéral d'une distance déterminée de ladite portion de la troisième barre 13 relativement au plan médian.

Ainsi, contrairement au premier mode de réalisation, le deuxième mode de réalisation n'autorise pas un déport latéral de la portion de la troisième barre 13 passant à travers la première ouverture 102 selon un continuum de positions, mais en revanche permet de sécuriser davantage la position centrée ou en déport de ladite portion.

Dans chacun des premier et deuxième modes de réalisation, lorsque les premier et second pieds 221, 222 reposent au sol 3, le poids du véhicule à bras 2, et plus particulièrement le poids de son châssis 21, repose sur l'appui de l'ergot 106 sur ladite au moins une série de dents 107 avec laquelle l'ergot 106 coopère pour verrouiller le mouvement de rotation desdites première et deuxième barres 11, 12 relativement au châssis 21.

Le troisième mode de réalisation de l'invention est décrit ci-dessous en référence aux figures 4 à 7, du moins pour ce qui concerne ses différences structurelles relativement aux premier et deuxième modes de réalisation décrits ci-dessus.

Dans ce troisième mode de réalisation, le dispositif de verrouillage et de déverrouillage 10 comprend deux bielles 111, 112. Contrairement aux premier et deuxième modes de réalisation de l'invention, le dispositif 10 ne comprend pas nécessairement, voire est préférentiellement exempt de, une traverse 101 prenant par exemple la forme d'une pièce sensiblement plane, fixée à la deuxième partie 212 du châssis 21 du véhicule 2.

Une première bielle 111 relie un premier côté latéral de la deuxième partie 212 du châssis 21 à une portion intermédiaire de la première barre 11 par deux articulations 111a, 111b fixées à ses extrémités.

Une seconde bielle 112 relie un second côté latéral de la deuxième partie 212 du châssis 21 à une portion intermédiaire de la deuxième barre 12 par deux articulations 112a, 112b fixées à ses extrémités.

La première bielle 111 est plus particulièrement reliée à une portion arrière d'un bord latéral du châssis 21 ou à une portion excentrée par rapport au plan médian 210 du bord arrière du châssis 21. Par ailleurs, la seconde bielle 112 est reliée au châssis 21 de façon symétrique à la première bielle 111. Les première et deuxième bielles 111, 112 présentent de préférence une même longueur et une même forme.

Les bielles 111, 112 sont configurées pour guider et limiter, de façon symétrique par rapport au plan médian 210, la rotation et la translation verticale des première et deuxième barres 11, 12 relativement au châssis 21 et le déplacement latéral du nœud de jonction 123.

Chacune des articulations 111a, 112a joignant une première extrémité d'une bielle 111, 112 à ladite portion intermédiaire d'une barre parmi les première et deuxième barres 11, 12 est une articulation configurée pour permettre une rotation et un désaxage de ladite extrémité autour d'un axe sensiblement parallèle au plan médian 210 et chacune des articulations 111b, 112b joignant l'extrémité d'une bielle 111, 112 à un côté latéral parmi les premier et second côtés latéraux de la deuxième partie 212 du châssis 21 est une articulation configurée pour permettre une rotation et un désaxage de ladite extrémité autour d'un axe sensiblement parallèle au plan médian 210 et pour présenter un jeu permettant d'accommoder la translation verticale des première et deuxième barres 11, 12 relativement au châssis 21. Pour ce faire, chacune des articulations 111b, 112b joignant l'extrémité d'une bielle 111, 112 à un côté latéral parmi les premier et second côtés latéraux de la deuxième partie 212 du châssis 21 présente par exemple une extrémité recourbée pénétrant selon une direction sensiblement parallèle, audit désaxage près, au plan médian 210 à travers une ouverture pratiquée dans le côté latéral correspondant du châssis 21 et présentant de préférence une forme oblongue.

Comme représenté sur la figure 4, le jeu que présente chacune des articulations 111b, 112b joignant l'extrémité d'une bielle 111, 112 à un côté latéral parmi les premier et second côtés latéraux de la deuxième partie 212 du châssis 21 est tel que, lorsque les premier et second pieds 221, 222 reposent au sol 3, le poids du véhicule à bras 2 ne repose pas sur l'appui de l'ergot 106 sur ladite au moins une série de dents 107 avec laquelle l'ergot 106 coopère pour verrouiller le mouvement de rotation desdites première et deuxième barres 11, 12 relativement au châssis 21, mais repose sur l'appui de l'extrémité de chaque bielle 111, 112 jointe à un côté latéral du châssis 21 sur ce côté latéral du châssis 21. Autrement dit, la forme de chaque ouverture pratiquée dans le côté latéral correspondant du châssis 21 à travers laquelle une extrémité recourbée de chaque bielle 111, 112 pénètre est d'une longueur suffisamment faible pour que la portion haute de cette ouverture constitue une butée sur laquelle le poids du véhicule 2, et en particulier de son châssis 21, repose lorsque le véhicule est en stationnement, en empêchant que ce poids se reporte sur l'ergot 106 coopérant avec ladite au moins une série de dents 107. Une stabilité accrue du véhicule à bras 2, et en particulier de son châssis 21, relativement aux points de contact entre le véhicule 2 et le sol 3, est ainsi avantageusement obtenue.

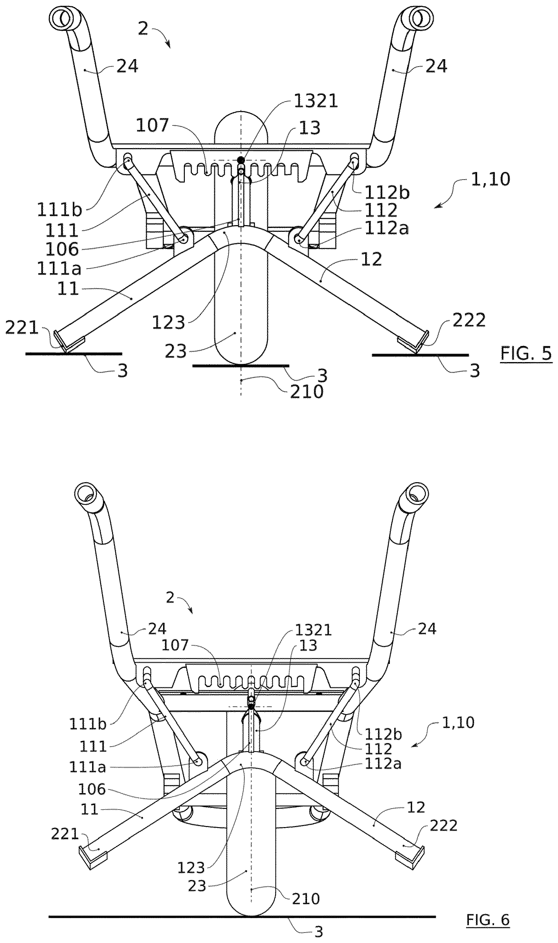

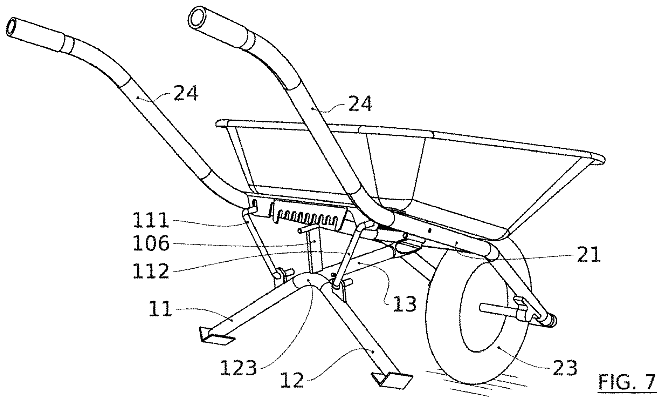

Comme illustré sur les figures 6 et 7, lorsque les premier et second pieds 221, 222 sont soulevés relativement au sol 3, la retenue en une position suspendue desdites première et deuxième barres 11, 12 est assurée par l'appui des articulations 111b, 112b des bielles 111, 112 sur les portions basses des ouvertures pratiquées dans les côtés latéraux du châssis 21. L'ergot 106 n'est alors pas situé entre deux dents de ladite au moins une série de dents 107, mais est maintenu en position basse relativement aux dents 107.

Une autre différence structurelle du troisième mode de réalisation relativement aux premier et deuxième modes de réalisation de l'invention consiste en ce que la série de dents 107 et réparties de façon sensiblement linéaire. En outre, la hauteur de ses dents 107 peut varier, de préférence en respectant une symétrie relativement au plan médian 210, de sorte à accommoder les variations de hauteur du nœud de jonction 123 au cours de la manipulation du véhicule à bras 2. Cette série de dents 107 peut être soit obtenue par usinage de la partie arrière du châssis 21, soit par report d'une plaque ou traverse 101 usinée, de préférence sensiblement longiligne, sur ladite partie arrière du châssis 21. Par ailleurs, la série de dents 107 peut comprendre à ses extrémités des dents, le cas échéant plus longues que les autres, destinées à servir de butée pour empêcher tout déport latéral du nœud de jonction 123 au-delà d'une certaine amplitude.

L'invention selon son troisième mode de réalisation autorise les mouvements susmentionnés du nœud de jonction 123 relativement au châssis 21 du véhicule à bras 2, tout en les limitant de façon adéquate. La longueur des bielles 111, 112, la distance à laquelle chacune des articulations 111a, 112a est fixée à la partie intermédiaire de la barre 11, 12 correspondante, les dimensions de la forme de chaque ouverture pratiquée dans un côté latéral du châssis 21, la longueur de l'ergot 106, ainsi que la hauteur des dents 107, peuvent être configurées de sorte à s'assurer, au moins pour une gamme de valeurs de dénivelé du sol 3, que le centrage de la projection orthogonale du centre de gravité du véhicule à bras 2 ne soit pas seulement amélioré relativement aux systèmes de mise à niveau automatique existants, mais soit parfait, lorsque les pieds 221, 222 sont amenés au sol 3, éventuellement successivement.

Notons ici que chacun des modes de réalisation décrits ci-dessus a montré une nette amélioration de la stabilité du véhicule à bras 2, lorsque celui-ci est stationné sur un sol présentant une pente allant jusqu'à 20°.

Pour chacun des modes de réalisation décrits ci-dessus, le dimensionnement relatif des différentes pièces en jeu, ainsi que leurs propriétés mécaniques respectives, notamment en termes de portance, sont des paramètres jugés pouvoir être définis au cas par cas par l'homme du métier, à la vue de la présente description détaillée.

Selon une variante de chacun des trois modes de réalisation de l'invention, deux séries de dents 107 superposées entre elles peuvent être prévues qui sont chacune destinées à coopérer avec l'ergot 106, à des hauteurs différentes de cet ergot 106. De la sorte, l'effort appliqué sur l'ergot 106 du fait du verrouillage de la rotation des première et deuxième barres 11, 12 relativement au châssis 21 est mieux réparti, ce qui tend à limiter l'usure du système 1, et donc à prolonger sa durée de vie.

Pour chacun des trois modes de réalisation, il est à noter que, lorsque les premier et second pieds 221, 222 sont soulevés relativement au sol, la pièce à trois branches formées des trois barres 11, 12, 13 et du nœud de jonction 123 revient toujours automatiquement dans une position horizontale. Ceci est particulièrement illustré sur les figures 6 et 7.

Dans chacun des trois modes de réalisation de l'invention, il est à noter que le déport latéral du nœud de jonction 123 entraîne les pieds 221, 222 de part et d'autre d'un plan perpendiculaire au plan médian et dans lequel les pieds s'inscrivent lorsqu'ils sont soulevés relativement au sol 3.

Comme mentionné ci-dessus, l'invention concerne selon un deuxième aspect un véhicule à bras 2 équipé d'un système de mise à niveau automatique selon le premier aspect de l'invention.

Le châssis 21 d'un tel véhicule à bras 2 peut être configuré pour y fixer l'un au moins parmi : une benne, au moins une ridelle, un plateau et un tonneau. Il sera apprécié que l'application du véhicule à bras 2 selon le deuxième aspect de l'invention au transport de liquide, et notamment d'eau destinée à l'arrosage d'un jardin potager éloigné de toute source, dans un tonneau est particulièrement avantageuse.

En complément ou en alternative, le véhicule à bras 2 peut comprendre au moins un frein dit permanent équipé d'une commande par câble et agencé conjointement avec ladite au moins une roue 23, de sorte à freiner la rotation de la roue 23 lorsque la commande par câble n'est pas sollicitée par l'utilisateur. Ainsi, le stationnement du véhicule à bras 2 sur un sol 3 présentant un dénivelé significatif n'est pas seulement sécurisé du fait que le véhicule à bras 2 est équipé d'un système de mise à niveau automatique 1 selon le premier aspect de l'invention, mais également, et de façon synergique, du fait que le véhicule à bras 2 est équipé dudit au moins frein.

L'invention n'est pas limitée aux modes de réalisations précédemment décrits et s'étend à tous les modes de réalisation couverts par les revendications.

Notamment, chacune des figures annexées représente une brouette en tant que véhicule à bras 2. Toutefois, l'invention n'est pas limitée à ce type particulier de véhicule à bras 2 ; il pourrait par exemple s'agir d'un chariot de golf.

En outre, au moins l'un des pieds 221, 222, de préférence chaque pied, peut être équipé d'une roulette. Par ailleurs, les pieds 221, 222, ou les première et deuxième barres 11, 12, peuvent être reliés entre eux par exemple par au moins une barre de renfort.

Par ailleurs, le véhicule à bras 2 n'est pas non plus limité aux exemples illustrés sur les figures qui comprennent une unique roue. En effet, il est par exemple possible que deux roues soient prévues, qui sont notamment montées sur un même essieu, ce dernier pouvant notamment être configuré pour pivoter autour de son centre pour compenser un éventuel dénivelé du sol 3.

De la même façon, les différentes figures illustrent un véhicule à bras 2 comprenant deux bras 24. Toutefois, l'invention n'est pas limitée à un tel véhicule à bras 2. Notamment, en particulier lorsque le véhicule à bras 2 comporte deux roues, le véhicule à bras ne pourra comporter qu'un seul bras, ce dernier s'étendant préférentiellement dans le plan médian 210.

## Revendications

1. Système mécanique de mise à niveau automatique (1) pour un véhicule à bras (2),
Le véhicule à bras (2) comprenant un châssis (21) sensiblement symétrique par rapport à un plan médian (210), au moins un pied (22), au moins une roue (23) et au moins un bras (24) configuré pour permettre à un utilisateur de soulever ledit au moins un pied (22) relativement au sol (3) pour pouvoir déplacer le véhicule (2) en le faisant rouler sur ladite au moins une roue (23), le châssis (21) comprenant une première partie (211), dite avant, configurée pour supporter ladite au moins une roue (23) et une deuxième partie (212), dite arrière, depuis laquelle s'étend ledit au moins un pied (22) et ledit au moins un bras (24),
le système (1) comprenant trois barres (11, 12, 13) agencées sous le châssis (21) du véhicule à bras (2) et s'étendant chacune depuis un nœud de jonction mécanique (123) dont une première barre (11) s'étend depuis le nœud (123) jusqu'à une extrémité distale formant un premier pied (221) du véhicule (2), une deuxième barre (12) s'étend depuis le nœud (123) jusqu'à une extrémité distale formant un second pied (222) du véhicule (2) et une troisième barre (13) s'étend depuis le nœud (123) jusqu'à une extrémité distale (131) configurée pour être fixée par une liaison mécanique (1321) à la première partie (211) du châssis (21) du véhicule (2),
le système (1) comprenant en outre au moins un dispositif de verrouillage et de déverrouillage automatiques (10) entre les première et deuxième barres (11, 12) et le châssis (21), le dispositif (10) étant fixé à la deuxième partie (212) du châssis (21) du véhicule (2) et étant configuré pour :
- retenir en une position suspendue lesdites première et deuxième barres (11, 12) lorsque les premier et second pieds (221, 222) sont soulevés relativement au sol (3),
- permettre un mouvement de rotation et de translation verticale desdites première et deuxième barres (11, 12) relativement au châssis (21) lorsque les premier et second pieds (221, 222) sont amenés au sol (3), le cas échéant successivement, et
- retenir le châssis (21) en une position de verrouillage de sa rotation relativement aux première et deuxième barres (11, 12) lorsque les premier et second pieds (221, 222) reposent au sol (3), les trois barres (11, 12, 13) s'étendent solidairement depuis le nœud de jonction (123), la liaison mécanique (1321) entre l'extrémité distale (131) de la troisième barre (13) et la première partie (211) du châssis (21) est une rotule,
le système (1) étant **caractérisé en ce que** le dispositif de verrouillage et de déverrouillage (10) est configuré pour permettre en outre un déplacement latéral limité du nœud de jonction (123) lorsque les premier et second pieds (221, 222) sont amenés au sol (3), le cas échéant successivement.

2. Système mécanique (1) selon la revendication précédente, dans lequel les trois barres (11, 12, 13) et le nœud de jonction (123) forment ensemble une pièce à trois branches présentant une symétrie par rapport à un plan de coupe longitudinal de la troisième barre (13), les première et deuxième barres (11, 12) formant entre elles une forme en V et étant agencées relativement au véhicule à bras (2) de sorte que la pointe de la forme en V soit orientée vers le châssis (21) du véhicule à bras (2).

3. Système mécanique (1) selon l'une quelconque des revendications 1 et 2, dans lequel le dispositif de verrouillage et de déverrouillage (10) comprend une traverse (101)fixée à la deuxième partie (212) du châssis (21) du véhicule (2) et présentant une première ouverture (102) à travers laquelle passe une portion de la troisième barre (13), ladite première ouverture (102) étant sensiblement symétrique par rapport au plan médian (210) et configurée pour permettre la rotation, la translation verticale des première et deuxième barres (11, 12) relativement au châssis (21) et le déplacement latéral du nœud de jonction (123).

4. Système mécanique (1) selon la revendication 3, dans lequel le dispositif de verrouillage et de déverrouillage (10) comprend en outre un organe de liaison (103) s'étendant solidairement depuis le nœud de jonction (123) et dans lequel ladite traverse (101) présente une deuxième ouverture (104) sensiblement symétrique par rapport au plan médian (210) et située sous la première ouverture (102), l'organe de liaison (103) et la deuxième ouverture (104) étant configurés pour coopérer entre eux avec un jeu de sorte à constituer à la fois un pivot autour duquel la rotation des première et deuxième barres (11, 12) relativement au châssis (21) est permise et un guide de la translation verticale des première et deuxième barres (11, 12).

5. Système mécanique (1) selon la revendication 3, dans lequel la première ouverture (102) présente au moins une indentation (105), de préférence un nombre pair d'indentations réparties symétriquement par rapport au plan médian (210), s'étendant depuis une portion supérieure de l'ouverture (102), chaque indentation (105) étant configurée pour former une partie d'un logement étroit permettant d'accueillir et de maintenir en position ladite portion de la troisième barre (13) lorsque les premier et second pieds (221, 222) reposent au sol (3), tout en coopérant avec ladite portion par un jeu permettant d'accommoder la translation verticale des première et deuxième barres (11, 12) relativement au châssis (21).

6. Système mécanique (1) selon l'une quelconque des revendications 1 et 2, dans lequel le dispositif de verrouillage et de déverrouillage (10) comprend deux bielles (111, 112) dont
- une première bielle (111) relie un premier côté latéral de la deuxième partie (212) du châssis (21) à une portion intermédiaire de la première barre (11) par deux articulations (111a, 111b) fixées à ses extrémités et
- une seconde bielle (112) relie un second côté latéral de la deuxième partie (212) du châssis (21) à une portion intermédiaire de la deuxième barre (12) par deux articulations (112a, 112b) fixées à ses extrémités,
les bielles (111, 112) étant configurées pour guider et limiter, de façon symétrique par rapport au plan médian, la rotation et la translation verticale des première et deuxième barres (11, 12) relativement au châssis (21) et le déplacement latéral du nœud de jonction (123).

7. Système mécanique (1) selon la revendication précédente, dans lequel chacune des articulations (111a, 112a) joignant une première extrémité d'une bielle (111, 112) à ladite portion intermédiaire d'une barre parmi les première et deuxième barres (11, 12) est une articulation configurée pour permettre une rotation et un désaxage de ladite extrémité autour d'un axe sensiblement parallèle au plan médian (210) et dans lequel chacune des articulations (111b, 112b) joignant l'extrémité d'une bielle (111, 112) à un côté latéral parmi les premier et second côtés latéraux de la deuxième partie (212) du châssis (21) est une articulation configurée pour permettre une rotation et un désaxage de ladite extrémité autour d'un axe sensiblement parallèle au plan médian (210) et pour présenter un jeu permettant d'accommoder la translation verticale des première et deuxième barres (11, 12) relativement au châssis (21).

8. Système mécanique (1) selon l'une quelconque des revendications précédentes, dans lequel le dispositif de verrouillage et de déverrouillage (10) est configuré pour permettre, par action de son poids, le déverrouillage du mouvement de rotation desdites première et deuxième barres (11, 12) relativement au châssis (21) lorsque les premier et second pieds (221, 222) sont soulevés relativement au sol (3) par un mouvement d'amplitude au moins supérieure à l'amplitude du mouvement de translation verticale desdites première et deuxième barres (11, 12) relativement au châssis (21).

9. Système mécanique (1) selon l'une quelconque des revendications précédentes, dans lequel le dispositif de verrouillage et de déverrouillage (10) comprend un ergot (106) s'étendant solidairement depuis le nœud de jonction (123) et au moins une série de dents (107) s'étendant vers le nœud (123) depuis la deuxième partie (212) du châssis (21), l'ergot (106) étant configuré pour se loger entre deux dents (107) de ladite au moins une série lorsque les premier et second pieds (221, 222) sont amenés au sol (3), le cas échéant successivement, de sorte à verrouiller le mouvement de rotation desdites première et deuxième barres (11, 12) relativement au châssis (21) lorsque les premier et second pieds (221, 222) reposent au sol (3).

10. Véhicule à bras (2) comprenant un système mécanique de mise à niveau automatique (1) selon l'une quelconque des revendications précédentes.

## Patentansprüche

1. Mechanisches Selbstnivellierungssystem (1) für ein Fahrzeug mit Ausleger (2),
wobei das Fahrzeug mit Ausleger (2) einen Rahmen (21), der im Wesentlichen symmetrisch im Verhältnis zu einer Mittelebene (210) ist, mindestens einen Fuß (22), mindestens ein Rad (23) und mindestens einen Ausleger (24) umfasst, der konfiguriert ist, um es einem Benutzer zu ermöglichen, den mindestens einen Fuß (22) im Verhältnis zum Boden (3) anzuheben, um das Fahrzeug (2) bewegen zu können, indem er es auf dem mindestens einen Rad (23) rollen lässt, wobei der Rahmen (21) einen ersten vorderen Teil (211), der konfiguriert ist, um das mindestens eine Rad (23) zu stützen, und einen zweiten hinteren Teil (212), von dem sich der mindestens eine Fuß (22) und der mindestens eine Ausleger (24) erstreckt, umfasst,
wobei das System (1) drei Stangen (11, 12, 13) umfasst, die unter dem Rahmen (21) des Fahrzeugs mit Ausleger (2) angeordnet sind und sich jeweils von einem mechanischen Verbindungsknoten (123) erstrecken, von dem sich eine erste Stange (11) von dem Knoten (123) zu einem distalen Ende erstreckt, das einen ersten Fuß (221) des Fahrzeugs (2) bildet, sich eine zweite Stange (12) von dem Knoten (123) zu einem distalen Ende erstreckt, das einen zweiten Fuß (222) des Fahrzeugs (2) bildet, und sich eine dritte Stange (13) von dem Knoten (123) zu einem distalen Ende (131) erstreckt, das konfiguriert ist, um durch eine mechanische Verbindung (1321) an dem ersten Teil (211) des Rahmens (21) des Fahrzeugs (2) befestigt zu werden,
wobei das System (1) ferner mindestens eine automatische Sperr- und Freigabevorrichtung (10) zwischen der ersten und der zweiten Stange (11, 12) und dem Rahmen (21) umfasst, wobei die Vorrichtung (10) am zweiten Teil (212) des Rahmens (21) des Fahrzeugs (2) befestigt und konfiguriert ist zum:
- Halten der ersten und der zweiten Stange (11, 12) in einer hängenden Position, wenn der erste und der zweite Fuß (221, 222) im Verhältnis zum Boden (3) angehoben sind,
- Ermöglichen einer Rotationsbewegung und einer vertikalen Verschiebung der ersten und der zweiten Stange (11, 12) relativ zum Rahmen (21), wenn der erste und der zweite Fuß (221, 222), gegebenenfalls nacheinander, zu Boden (3) geführt sind, und
- Halten des Rahmens (21) in einer Position zum Sperren seiner Drehung relativ zu der ersten und der zweiten Stange (11, 12), wenn der erste und der zweite Fuß (221, 222) auf dem Boden (3) ruhen,
wobei die drei Stangen (11, 12, 13) sich einstückig vom Verbindungsknoten (123) erstrecken, die mechanische Verbindung (1321) zwischen dem distalen Ende (131) der dritten Stange (13) und dem ersten Teil (211) des Rahmens (21) ein Drehgelenk ist,
wobei das System (1) **dadurch gekennzeichnet ist, dass** die Sperr- und Freigabevorrichtung (10) so konfiguriert ist, dass sie ferner eine begrenzte seitliche Bewegung des Verbindungsknotens (123) ermöglicht, wenn der erste und der zweite Fuß (221, 222), gegebenenfalls nacheinander, zu Boden (3) geführt sind.

2. Mechanisches System (1) nach dem vorhergehenden Anspruch, wobei die drei Stangen (11, 12, 13) und der Verbindungsknoten (123) zusammen ein dreiarmiges Stück bilden, das bezüglich einer Längsschnittebene der dritten Stange (13) eine Symmetrie aufweist, wobei die erste und die zweite Stange (11, 12) eine V-Form zwischen sich bilden und relativ zum Fahrzeug mit Ausleger (2) so angeordnet sind, dass die Spitze der V-Form zum Rahmen (21) des Fahrzeugs mit Ausleger (2) ausgerichtet ist.

3. Mechanisches System (1) nach einem der Ansprüche 1 und 2, wobei die Sperr- und Freigabevorrichtung (10) einen Querträger (101) umfasst, der an dem zweiten Teil (212) des Rahmens (21) des Fahrzeugs (2) befestigt ist und eine erste Öffnung (102) aufweist, durch die ein Abschnitt der dritten Stange (13) verläuft, wobei die erste Öffnung (102) im Wesentlichen symmetrisch im Verhältnis zur Mittelebene (210) und konfiguriert ist, um die Drehung, die vertikale Verschiebung der ersten und der zweiten Stange (11, 12) relativ zum Rahmen (21) und die seitliche Bewegung des Verbindungsknotens (123) zu ermöglichen.

4. Mechanisches System (1) nach Anspruch 3, wobei die Sperr- und Freigabevorrichtung (10) ferner ein Verbindungselement (103) umfasst, das sich einstückig von dem Verbindungsknoten (123) erstreckt, und wobei der Querträger (101) eine zweite Öffnung (104) aufweist, die im Wesentlichen symmetrisch im Verhältnis zur Mittelebene (210) ist und sich unter der ersten Öffnung (102) befindet, wobei das Verbindungselement (103) und die zweite Öffnung (104) so konfiguriert sind, dass sie mit Spiel zusammenwirken, um sowohl einen Drehpunkt, um den die Drehung der ersten und der zweiten Stange (11, 12) relativ zum Rahmen (21) zugelassen wird, als auch eine Führung für die vertikale Verschiebung der ersten und der zweiten Stange (11, 12) zu bilden.

5. Mechanisches System (1) nach Anspruch 3, wobei die erste Öffnung (102) mindestens eine Vertiefung (105) aufweist, vorzugsweise eine gerade Anzahl von Vertiefungen, die symmetrisch im Verhältnis zur Mittelebene (210) verteilt sind und sich von einem oberen Abschnitt der Öffnung (102) erstrecken, wobei jede Vertiefung (105) so konfiguriert ist, dass sie einen Teil eines schmalen Gehäuses bildet, das ermöglicht, den Abschnitt der dritten Stange (13) aufzunehmen und in Position zu halten, wenn der erste und der zweite Fuß (221, 222) auf dem Boden (3) ruhen, wobei alle mit dem Abschnitt durch ein Spiel zusammenwirken, das die Aufnahme der vertikalen Verschiebung der ersten und der zweiten Stange (11, 12) relativ zum Rahmen (21) ermöglicht.

6. Mechanisches System (1) nach einem der Ansprüche 1 und 2, wobei die Sperr- und Freigabevorrichtung (10) zwei Pleuel (111, 112) umfasst, von denen
- eine erstes Pleuel (111) eine erste laterale Seite des zweiten Teils (212) des Rahmens (21) mit einem Zwischenabschnitt der ersten Stange (11) durch zwei Gelenke (111a, 111b), die an ihren Enden befestigt sind, verbindet und
- ein zweites Pleuel (112) eine zweite seitliche Seite des zweiten Teils (212) des Rahmens (21) mit einem Zwischenabschnitt der zweiten Stange (12) durch zwei Gelenke (112a, 112b), die an ihren Enden befestigt sind, verbindet,
wobei die Pleuel (111, 112) so konfiguriert sind, dass sie die Drehung und die vertikale Verschiebung der ersten und der zweiten Stange (11, 12) relativ zum Rahmen (21) und der seitlichen Verschiebung des Verbindungsknotens (123) symmetrisch im Verhältnis zur Mittelebene führen und begrenzen.

7. Mechanisches System (1) nach dem vorhergehenden Anspruch, wobei jedes der Gelenke (111a, 112a), die ein erstes Ende eines Pleuels (111, 112) mit dem Zwischenabschnitt einer Stange von der ersten und der zweiten Stange (11, 12) verbinden, ein Gelenk ist, das so konfiguriert ist, dass es eine Drehung und eine Achsenabweichung des Endes um eine im Wesentlichen zur Mittelebene (210) parallelen Achse ermöglicht, und wobei jedes der Gelenke (111b, 112b), die das Ende eines Pleuels (111, 112) mit einer lateralen Seite von der ersten und der zweiten lateralen Seite des zweiten Teils (212) des Rahmens (21) verbinden, ein Scharnier ist, das so konfiguriert ist, dass es eine Drehung und eine Achsenabweichung des Endes um eine im Wesentlichen zur Mittelebene (210) parallelen Achse ermöglicht und ein Spiel aufweist, das die Aufnahme der vertikalen Verschiebung der ersten und der zweiten Stange (11, 12) relativ zum Rahmen (21) ermöglicht.

8. Mechanisches System (1) nach einem der vorhergehenden Ansprüche, wobei die Sperr- und Freigabevorrichtung (10) so konfiguriert ist, dass sie durch Einwirkung ihres Gewichts die Freigabe der Drehbewegung der ersten und der zweiten Stange (11, 12) relativ zum Rahmen (21) ermöglicht, wenn der erste und der zweite Fuß (221, 222) zumindest durch eine Amplitudenbewegung, die größer als die Amplitude der vertikalen Verschiebungsbewegung der ersten und der zweiten Stange (11, 12) relativ zum Rahmen (21) ist, relativ zum Boden (3) angehoben sind.

9. Mechanisches System (1) nach einem der vorhergehenden Ansprüche, wobei die Sperr- und Freigabevorrichtung (10) einen Vorsprung (106), der sich einstückig von dem Verbindungsknoten (123) erstreckt, und mindestens eine Reihe von Zähnen (107) umfasst, die sich von dem zweiten Teil (212) des Rahmens (21) zum Knoten (123) erstrecken, wobei der Vorsprung (106) so konfiguriert ist, dass er zwischen zwei Zähne (107) der mindestens einen Reihe passt, wenn der erste und der zweite Fuß (221, 222), gegebenenfalls nacheinander, auf den Boden (3) geführt sind, um die Drehbewegung der ersten und der zweiten Stange (11, 12) relativ zum Rahmen (21) zu sperren, wenn der erste und der zweite Fuß (221, 222) auf dem Boden (3) ruhen.

10. Fahrzeug mit Ausleger (2), das ein mechanisches Selbstnivellierungssystem (1) nach einem der vorhergehenden Ansprüche umfasst.

## Claims

1. A mechanical system for automatic levelling (1) for a vehicle with arms (2), The vehicle with arms (2) comprising a chassis (21) substantially symmetrical relative to a median plane (210), at least one foot (22), at least one wheel (23) and at least one arm (24) configured to allow a user to lift said at least one foot (22) relative to the ground (3) in order to be able to move the vehicle (2) by making it to roll on said at least one wheel (23), the chassis (21) comprising a first part (211), termed front part, configured to support said at least one wheel (23) and a second part (212), termed rear part, from which said at least one foot (22) and said at least one arm (24) extend,
the system (1) comprising three bars (11, 12, 13) arranged under the chassis (21) of the vehicle with arms (2) and each extending from a mechanical trunk node (123) including a first bar (11) extending from the node (123) to a distal end forming a first foot (221) of the vehicle (2), a second bar (12) extending from the node (123) to a distal end forming a second foot (222) of the vehicle (2) and a third bar (13) extending from the node (123) to a distal end (131) configured to be secured by a mechanical connection (1321) to the first part (211) of the chassis (21) of the vehicle (2),
the system (1) further comprising at least an automatic locking and unlocking device (10) between the first and second bars (11, 12) and the chassis (21), the device (10) being secured to the second part (212) of the chassis (21) of the vehicle (2) and being configured to:
- keep in a suspended position said first and second bars (11, 12) when the first and second feet (221, 222) are raised relative to the ground (3),
- allow a rotational movement and vertical translational motion of said first and second bars (11, 12) relative to the chassis (21) when the first and second feet (221, 222) are brought to the ground (3), where necessary successively, and
- keep the chassis (21) in a position where it rotation is locked relative to the first and second bars (11, 12) when the first and second feet (221, 222) are resting on the ground (3),
the three bars (11, 12, 13) extend inseparably from the trunk node (123), the mechanical connection (1321) between the distal end (131) of the third bar (13) and the first part (211) of the chassis (21) is a spherical joint, the system (1) **characterised in that** the locking and unlocking device (10) is configured to further allow a limited lateral movement of the trunk node (123) when the first and second feet (221, 222) are brought to the ground (3), where necessary successively.

2. The mechanical system (1) according to the previous claim, wherein the three bars (11, 12, 13) and the trunk node (123) together form a three-branch piece having a symmetry relative to longitudinal section plane of the third bar (13), the first and second bars (11, 12) forming between themselves a V shape and being arranged relative to the vehicle with arms (2) such that the tip of the V shape is directed towards the chassis (21) of the vehicle with arms (2).

3. The mechanical system (1) according to any of claims 1 and 2, where in the locking and unlocking device (10) comprises a crosspiece (101) secured to the second part (212) of the chassis (21) of the vehicle (2) and having a first opening (102) through which a portion of the third bar (13) passes, said first opening (102) being substantially symmetrical relative to the median plane (210) and configured to allow rotation, vertical translational motion of the first and second bars (11, 12) relative to the chassis (21) and lateral movement of the trunk node (123).

4. The mechanical system (1) according to claim 3, wherein the locking and unlocking device (10) further comprises a link unit (103) extending inseparably from the trunk node (123) and
wherein said crosspiece (101) has a second opening (104) substantially symmetrical relative to the median plane (210) and situated under the first opening (102), the link unit (103) and the second opening (104) being configured to cooperate with each other with a play, so as to create both a swivel that allows for rotation of the first and second bars (11, 12) relative to the chassis (21) and a guide for the vertical translational motion of the first and second bars (11, 12).

5. The mechanical system (1) according to claim 3, wherein the first opening (102) has at least one indentation (105), preferably an even number of indentations distributed symmetrically relative to the median plane (210), extending from an upper portion of the opening (102), each indentation (105) being configured to form a part of a narrow housing allowing to accommodate and hold in position said portion of the third bar (13) when the first and second feet (221, 222) are resting on the ground (3), while cooperating with said portion by a play allowing to accommodate the vertical translational motion of the first and second bars (11, 12) relative to the chassis (21).

6. The mechanical system (1) according to any of claims 1 and 2, wherein the locking and unlocking device (10) comprises two connecting rods (111, 112), including:
- a first connecting rod (111) connecting a first lateral surface of the second part (212) of the chassis (21) to an intermediate portion of the first bar (11) by two joints (111a, 111b) secured to its ends, and
- a second connecting rod (112) connecting a second lateral surface of the second part (212) of the chassis (21) to an intermediate portion of the second bar (12) by two joints (112a, 112b) secured to its ends,
the connecting rods (111, 112) being configured to guide and limit, symmetrically relative to the median plane, the rotation and vertical translational motion of the first and second bars (11, 12) relative to the chassis (21) and the lateral movement of the trunk node (123).

7. The mechanical system (1) according to the previous claim, wherein each of the joints (111a, 112a) joining a first end of a connecting rod (111, 112) to said intermediate portion of a bar from the first and second bars (11, 12) is a joint configured to allow rotation and offset of said end around an axis substantially parallel to the median plane (210) and wherein each of the joints (111b, 1112b) joining the end of a connecting rod (111, 112) to a lateral surface from the first and second lateral surfaces of the second part (212) of the chassis (21) is a joint configured to allow rotation and offset of said end around an axis substantially parallel to the median plane (210) and to have a play that allows to accommodate the vertical translational motion of the first and second bars (11, 12) relative to the chassis (21).

8. The mechanical system (1) according to any of the previous claims, wherein the locking and unlocking device (10) is configured to allow, by the action of its weight, the locking of the rotational movement of said first and second bars (11, 12) relative to the chassis (21) when the first and second feet (221, 222) are raised relative to the ground (3) by a movement of an amplitude at least greater than the amplitude of the vertical translational motion of said first and second bars (11, 12) relative to the chassis (21).

9. The mechanical system (1) according to any of the previous claims, wherein the locking and unlocking device (10) comprises a stub (106) extending inseparably from the trunk node (123) and the at least one series of teeth (107) extending towards the node (123) from the second part (212) of the chassis (21), the stub (106) being configured to fit between two teeth (107) of said at least one series when the first and second feet (221, 222) are brought to the ground (3), where necessary successively, so as to lock the rotational movement of said first and second bards (11, 12) relative to the chassis (21) when the first and second feet (221, 222) are resting on the ground (3).

10. A vehicle with arms (2) comprising a mechanical system for automatic levelling (1) according to any of the previous claims.
